# FASCICULE DE BREVET EUROPEEN

(11) **EP 3 724 076 B1**
(45) Date de publication et mention de la délivrance du brevet: **15.05.2024**
(21) Numéro de dépôt: 18833101.1
(22) Date de dépôt: 13.12.2018
(51) Int. Cl.: B64D 33/02, B64D 15/02

(54) **LÈVRE D'ENTRÉE D'AIR DE NACELLE POUR TURBORÉACTEUR**
LUFTEINLASSLIPPE FÜR EINE TURBOSTRAHLGONDEL
AIR INFLOW LIP FOR TURBOJET NACELLE

(30) Priorité: 13.12.2017 FR 1762065
(43) Date de publication de la demande: 21.10.2020
(73) Titulaire: Safran Nacelles, 76700 Gonfreville-l'Orcher (FR)
(72) Inventeur: BOILEAU, Patrick, 76700 GONFREVILLE L'ORCHER (FR); COAT-LENZOTTI, Caroline, 76700 GONFREVILLE L'ORCHER (FR); VERSAEVEL, Marc, 76700 GONFREVILLE L'ORCHER (FR); DIGEOS, Virginie Emmanuelle Anne Marie, 76700 GONFREVILLE L'ORCHER (FR); BEHAGHEL, Pierre-François, 76700 GONFREVILLE L'ORCHER (FR)
(74) Mandataire: Germain Maureau
(86) Numéro de dépôt international: PCT/FR2018/053269
(87) Numéro de publication internationale: WO 2019/115959

(56) Documents cités:
- WO-A2-2016/102691
- US-A1- 2002 139 900
- US-A1- 2010 276 548
- US-A1- 2010 314 082
- US-A1- 2012 090 693
- US-A1- 2012 317 782
- US-A1- 2017 089 238
- US-B2- 8 172 037

## Description

La présente invention se rapporte à une lèvre d'entrée d'air de nacelle pour turboréacteur d'aéronef.

Les turboréacteurs d'aéronef sont générateurs d'une pollution sonore importante. Il existe une forte demande visant à réduire cette pollution, et ce d'autant plus que les turboréacteurs utilisés deviennent de plus en plus puissants. La conception de la nacelle entourant un turboréacteur contribue pour une grande partie à la réduction de cette pollution sonore.

Afin d'améliorer davantage les performances acoustiques des aéronefs, les nacelles sont dotées de panneaux acoustiques visant à atténuer le bruit généré par le turboréacteur.

Généralement, de tels panneaux acoustiques sont installés sur la nacelle entourant le turboréacteur en entrée et/ou sortie du canal de soufflante du turboréacteur.

Une nacelle pour turboréacteur d'aéronef a typiquement plusieurs fonctionnalités comme celles de canaliser le flux d'air entrant et sortant du moteur, d'inverser la poussée du turboréacteur, ou encore d'intégrer des dispositifs d'atténuation de bruit et de dégivrage.

Lors d'une phase de vol d'un aéronef, il est possible que les conditions climatiques en altitude entraînent une formation de givre à différents endroits de l'aéronef. Du givre peut par exemple se former sur la nacelle du turboréacteur, notamment sur le bord d'attaque de ladite nacelle. Une telle formation de givre est inacceptable, car elle peut entraîner des modifications du profil aérodynamique de la nacelle, ou peut aussi endommager le turboréacteur dans le cas d'arrachement de blocs de glace qui se sont formés sur la lèvre d'entrée d'air de la nacelle.

Il est donc impératif d'équiper la nacelle du turboréacteur, et notamment la lèvre d'entrée d'air, d'un dispositif évitant la formation du givre et de la glace sur la nacelle.

De tels dispositifs sont, de manière connue, réalisés en prélevant des gaz chauds dans le compresseur du turboréacteur et en les redirigeant sur la surface de la nacelle qui peut être affectée par la formation de glace.

Un problème récurrent est lié à la cohabitation des dispositifs d'absorption acoustique et de dégivrage. En effet, en général, un panneau d'absorption acoustique est une structure sandwich dont la peau arrière est imperméable. Par conséquent, intégrer un panneau acoustique classique à la lèvre empêcherait son dégivrage car on réchaufferait uniquement la peau arrière du panneau.

Le document EP 0 913 326 propose une solution à ce problème grâce à l'installation d'un tube « Piccolo » à l'intérieur de la lèvre d'entrée d'air de la nacelle ou d'un système de circulation tournante du fluide de dégivrage, permettant d'injecter un fluide dégivrant à travers la structure à âme alvéolaire formant la couche intermédiaire du dispositif d'absorption acoustique.

Le document EP 1 103 462 décrit également un système de circulation tournante d'un fluide de dégivrage, tube « swirl », qui délivre un fluide de dégivrage traversant ensuite une structure à âme alvéolaire d'un dispositif de traitement acoustique.

Un inconvénient commun à ces solutions est que le traitement acoustique se trouve perturbé par ce fluide, ce qui entraîne un mauvais fonctionnement du dispositif d'absorption acoustique.

De plus, un débit d'air très important serait nécessaire du fait de la surface acoustique importante.

Une solution de l'art antérieur à ce problème consiste à intégrer la fonction de dégivrage dans la fonction de traitement acoustique. Pour ce faire, des canaux de circulation d'un fluide de dégivrage sont agencés à l'intérieur de l'âme du sandwich acoustique.

C'est par exemple le cas des documents FR 2 981 049, WO 2015/071609, US 8 172 037, US 2012/0317782, US 2010/276548 et FR 2 953 811.

Dans l'ensemble de ces documents, le volume d'amortissement acoustique est défini par la structure à âme alvéolaire, qui inclut un volume de circulation d'un fluide de dégivrage.

Le volume de circulation du fluide de dégivrage est obtenu par l'intégration de conduits de circulation de fluide de dégivrage, fixés à l'intérieur de la structure à âme alvéolaire ou directement pratiqués dans la structure à âme alvéolaire.

L'intégration de ces conduits est difficile à réaliser compte tenu des matériaux utilisés pour réaliser les structures à âme alvéolaire telles que les structures de type « nids d'abeilles ».

Par ailleurs, l'étanchéité entre les conduits de circulation de fluide de dégivrage et la structure de traitement acoustique à âme alvéolaire en nids d'abeille est difficile à obtenir.

La présente invention vise à résoudre les inconvénients de l'art antérieur, et concerne pour ce faire une lèvre d'entrée d'air de nacelle pour turboréacteur d'aéronef selon la revendication 1.

Ainsi, en prévoyant de dissocier la partie principale du dispositif de traitement acoustique du dispositif de dégivrage, il n'est plus nécessaire de modifier la structure du dispositif de traitement acoustique afin qu'il intègre le dispositif de dégivrage pneumatique. On facilite ainsi l'intégration des fonctions de traitement acoustique et de dégivrage dans la lèvre d'entrée d'air.

Compte tenu du fait que les cellules acoustiques du dispositif de traitement acoustique sont superposées à la semelle de dégivrage, aucun usinage n'est nécessaire pour intégrer les conduits de circulation de fluide de dégivrage, contrairement aux solutions de l'art antérieur.

De plus, en prévoyant de séparer structurellement le dispositif de dégivrage du dispositif de traitement acoustique, on simplifie la fabrication de ces dispositifs et on obtient une plus grande autonomie fonctionnelle et structurelle entre ces dispositifs.

La forme structurelle de la semelle de dégivrage n'est ainsi pas liée ou dépendante de celle des cellules acoustiques qui sont rapportées à la semelle de dégivrage.

La semelle de dégivrage selon l'invention permet aussi d'optimiser la fonction d'antigivrage par un réseau de conduits de circulation de fluide de dégivrage, qui peut être non linéaire ou distribué.

Selon des caractéristiques optionnelles de la lèvre d'entrée d'air de l'invention :
- les puits acoustiques de la semelle de dégivrage alvéolée débouchent au niveau de parois inférieure et supérieure de la semelle de dégivrage alvéolée ;
- les conduits de circulation d'un fluide de dégivrage de la semelle de dégivrage alvéolée débouchent au moins au niveau de parois latérales amont et aval de la semelle de dégivrage alvéolée ;
- la semelle de dégivrage alvéolée comporte au moins un déflecteur agencé pour capter le fluide de dégivrage provenant du dispositif d'alimentation en fluide de dégivrage ;
- que la semelle de dégivrage alvéolée comporte au moins une surface d'échange conçue pour conduire le fluide de dégivrage provenant du dispositif d'alimentation en fluide de dégivrage par conduction à travers ladite semelle de dégivrage alvéolée ;
- le dispositif d'alimentation en fluide de dégivrage comporte un tube d'injection d'un fluide de dégivrage agencé à l'intérieur de la cavité de ladite lèvre d'entrée d'air, ledit tube d'injection comportant une pluralité de perçages conçus pour délivrer un fluide de dégivrage à l'intérieur de ladite cavité, et la semelle de dégivrage alvéolée comporte au moins une buse d'injection de fluide de dégivrage communiquant avec au moins un desdits conduits de circulation du fluide de dégivrage, ladite au moins une buse d'injection étant agencée sensiblement en regard d'au moins un desdits perçages du tube d'injection d'un fluide de dégivrage ;
- la cavité de la lèvre d'entrée d'air reçoit une paroi de blocage du fluide de dégivrage, montée de façon annulaire en amont d'une sortie du dispositif d'alimentation en fluide de dégivrage. Ainsi, lorsqu'un fluide de dégivrage est introduit dans la cavité de la lèvre d'entrée d'air, la paroi annulaire ainsi agencée force le fluide de dégivrage à être introduit dans la semelle de dégivrage, depuis l'aval vers l'amont de la semelle de dégivrage ;
- la semelle de dégivrage alvéolée du dispositif de dégivrage acoustique présente une épaisseur comprise entre 2 mm et 20 mm, de préférence comprise entre 5 mm et 15 mm ;
- la superficie de la paroi supérieure de la semelle de dégivrage alvéolée est sensiblement égale à la superficie d'une paroi inférieure du dispositif de traitement acoustique ;
- les conduits de circulation du fluide de dégivrage sont répartis de manière irrégulière à l'intérieur de la semelle de dégivrage alvéolée ;
- la semelle de dégivrage alvéolée est fixée sur la paroi interne de la lèvre d'entrée d'air par brasage et/ou par collage ;
- selon une variante, la semelle de dégivrage alvéolée comporte un bord de fixation à la paroi interne de la lèvre d'entrée d'air, ledit bord de fixation étant relié à ladite paroi interne par rivetage et/ou par vissage ;
- selon une autre variante, la semelle de dégivrage alvéolée comporte un bord de fixation à la paroi interne de la lèvre d'entrée d'air et la lèvre d'entrée d'air comporte une bride de fixation de la semelle de dégivrage alvéolée, ladite bride de fixation étant montée sur la paroi interne de la lèvre d'entrée d'air et sur le bord de fixation de la semelle de dégivrage alvéolée ;
- la paroi supérieure de la semelle de dégivrage alvéolée comporte au moins un perçage conçu pour assurer une communication entre la semelle de dégivrage alvéolée et le dispositif de traitement acoustique. Cela permet d'obtenir une continuité acoustique entre le dispositif de traitement acoustique et la semelle de dégivrage ;
- le dispositif de traitement acoustique est fixé sur la paroi supérieure de la semelle de dégivrage alvéolée par collage et/ou par brasage et/ou par rivetage et/ou par vissage ;
- la lèvre d'entrée d'air comporte une pluralité de semelles de dégivrage alvéolées réparties sur toute la circonférence de la paroi interne de la lèvre d'entrée d'air ;
- la lèvre d'entrée d'air comporte une pluralité de semelles de dégivrage alvéolées réparties sur toute la circonférence de la paroi interne de la lèvre d'entrée d'air, lesdites semelles de dégivrage alvéolées étant encastrées ou imbriquées entre elles.

D'autres caractéristiques et avantages de l'invention apparaîtront à la lecture de la description détaillée qui suit pour la compréhension de laquelle on se reportera aux dessins annexés dans lesquels :
- la figure 1 est une vue isométrique d'un ensemble propulsif selon l'invention ;
- la figure 2 est une vue de détail en perspective de l'entrée d'air de la nacelle de la figure 1 ;
- la figure 3 illustre une semelle de dégivrage alvéolée selon une première variante de l'invention ;
- la figure 4 est une vue isométrique en coupe partielle de la semelle de dégivrage alvéolée de la figure 3 ;
- la figure 5 est une vue isométrique de dessous d'un couple semelle de dégivrage alvéolée/dispositif de traitement acoustique, la semelle de dégivrage alvéolée étant obtenue selon une deuxième variante ;
- la figure 6 illustre un premier mode de réalisation de la lèvre d'entrée d'air selon l'invention ;
- la figure 7 est une vue en coupe longitudinale de l'ensemble formé par la paroi interne de la lèvre d'entrée d'air obtenue selon le premier mode de réalisation, et par le couple semelle de dégivrage alvéolée/dispositif de traitement acoustique ;
- la figure 8 est une variante de réalisation de la lèvre d'entrée d'air du premier mode de réalisation ;
- la figure 9 illustre un deuxième mode de réalisation de la lèvre d'entrée d'air selon l'invention ;
- la figure 10 illustre le principe de fonctionnement de la lèvre d'entrée d'air obtenue selon le premier ou selon le deuxième mode de réalisation de l'invention ;
- la figure 11 est une identique à celle de la figure 7, détaillant un troisième mode de réalisation de l'invention ;
- la figure 12 illustre le principe de fonctionnement de la lèvre d'entrée d'air obtenue selon le troisième mode de réalisation de l'invention ;
- la figure 13 illustre une première réalisation de la fixation de la semelle de dégivrage alvéolée sur la lèvre d'entrée d'air ;
- la figure 14 illustre une deuxième réalisation de la fixation de la semelle de dégivrage alvéolée sur la lèvre d'entrée d'air ;
- la figure 15 illustre une troisième réalisation de la fixation de la semelle de dégivrage alvéolée sur la lèvre d'entrée d'air.

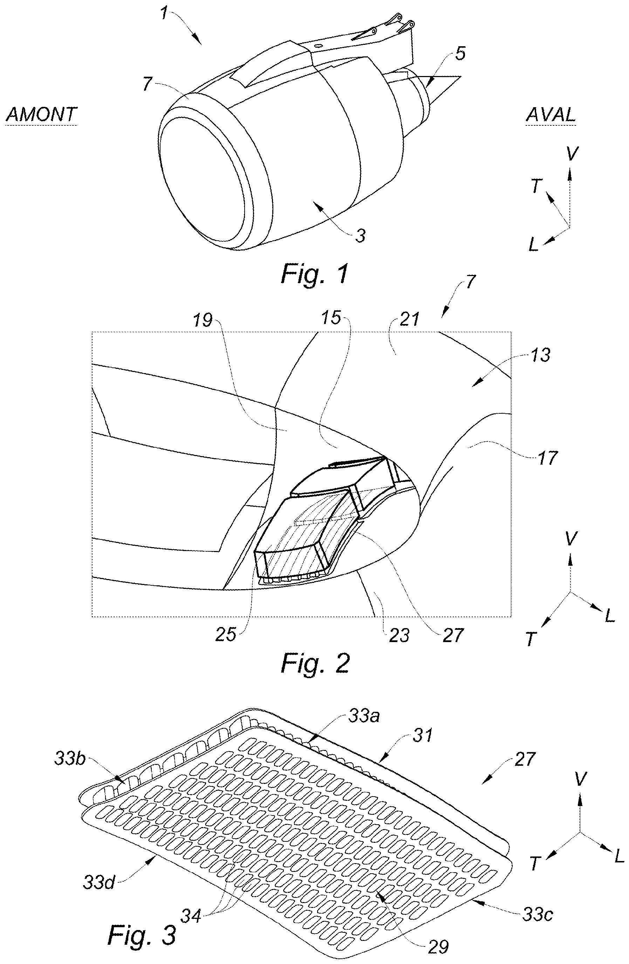

Dans la description et dans les revendications, les termes « amont » et «aval » doivent s'entendre par rapport à la circulation du flux d'air à l'intérieur de l'ensemble propulsif formé par la nacelle et le turboréacteur, c'est-à-dire de la gauche vers la droite en référence à la figure 1.

De même, on utilisera à titre non limitatif les expressions « interne » et « externe » en référence à l'éloignement radial par rapport à l'axe longitudinal de la nacelle, l'expression « interne » définissant une zone radialement plus proche de l'axe longitudinal de la nacelle, par opposition à l'expression « externe ».

Par ailleurs, dans la description et les revendications, pour clarifier la description et les revendications, on adoptera à titre non limitatif la terminologie longitudinal, vertical et transversal en référence au trièdre L, V, T indiqué aux figures.

En outre, sur l'ensemble des figures, des références identiques ou analogues représentent des organes ou ensembles d'organes identiques ou analogues.

On a représenté à la figure 1 un ensemble propulsif 1 comportant une nacelle 3 supportant un turboréacteur 5 d'aéronef. La nacelle 3 comporte une section amont comportant une entrée d'air 7.

En référence à la figure 2, illustrant une partie de l'entrée d'air 7 de la nacelle de la figure 1, l'entrée d'air 7 comporte une lèvre d'entrée d'air 13. La lèvre d'entrée d'air 13 comporte une cavité 15 délimitée d'une part par un bord d'attaque 17 de la nacelle et d'autre part par une cloison annulaire 19.

Le bord d'attaque 17 de la nacelle relie une paroi externe 21 de la lèvre d'entrée d'air 13 et une paroi interne 23 de la lèvre d'entrée d'air. L'ensemble formé par le bord d'attaque 17, la paroi externe 21 et la paroi interne 23, est réalisé en une seule pièce par une même peau.

La lèvre d'entrée d'air comporte un dispositif de traitement acoustique 25. Le dispositif de traitement acoustique 25 peut par exemple être constitué par une structure à âme alvéolaire de type « nids d'abeilles » connue de l'art antérieur, comportant une pluralité de cavités acoustiques définies par des alvéoles.

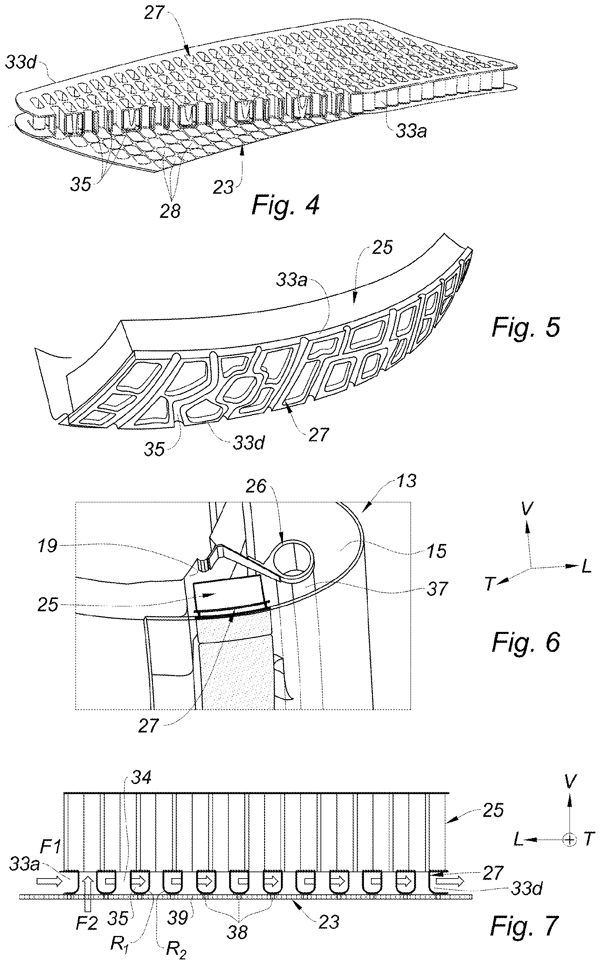

La lèvre d'entrée d'air comporte par ailleurs un dispositif de dégivrage pneumatique, qui comporte un dispositif d'alimentation 26 en fluide de dégivrage (visible notamment à la figure 6).

Selon l'invention, le dispositif de dégivrage pneumatique comporte une semelle de dégivrage alvéolée 27, de conception distincte et indépendante du dispositif de traitement acoustique 25.

La semelle de dégivrage alvéolée 27 est montée sur la paroi interne 23 de la lèvre d'entrée d'air 13, à l'intérieur de la cavité 15 de la lèvre d'entrée d'air.

La paroi interne 23 de la lèvre comporte une pluralité de perçages acoustiques 28 (visibles à la figure 4) au droit de chaque semelle de dégivrage alvéolée 27.

Cela permet de réaliser un absorbeur acoustique, formé par le couple dispositif de traitement acoustique 25/semelle de dégivrage alvéolée 27, dont les cavités acoustiques dudit absorbeur sont formées par des puits acoustiques intégrés à la semelle de dégivrage alvéolée 27 (comme décrit en détails en référence à la figure 3) et par des cavités acoustiques définies par les alvéoles du dispositif de traitement acoustique 25.

Le dispositif de traitement acoustique 25 est fixé sur une paroi supérieure de la semelle de dégivrage alvéolée, par exemple par collage et/ou par brasage et/ou par tout autre moyen de fixation adapté tel que par rivetage, vissage, etc.

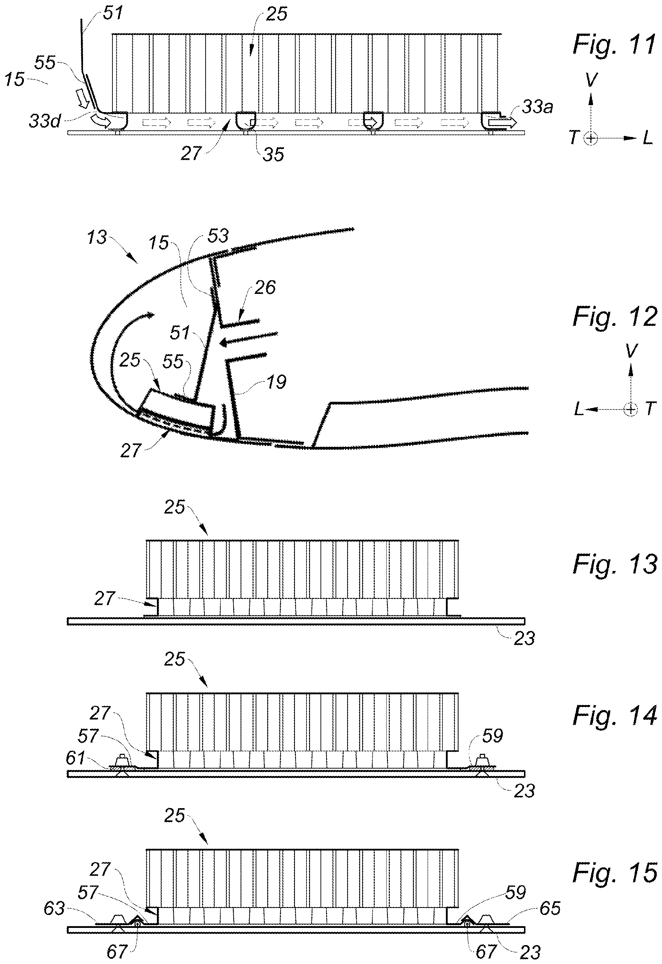

La réalisation de la fixation de la semelle de dégivrage alvéolée 27 sur la lèvre d'entrée d'air est donnée dans la suite de la description, en référence aux figures 12 à 14.

Le dispositif de traitement acoustique 25 est fixé sur une paroi supérieure de la semelle de dégivrage alvéolée 27, de sorte que le dispositif de traitement acoustique 25 est superposé à la semelle de dégivrage alvéolée 27. Le dispositif de traitement acoustique 25 peut comporter une pluralité d'alvéoles en nids d'abeilles. Lorsque le dispositif de traitement acoustique est fixé sur une paroi supérieure de la semelle de dégivrage, une peau pleine peut recouvrir une paroi supérieure du dispositif de traitement acoustique, ceci afin de rendre étanches les alvéoles du dispositif de traitement acoustique.

La lèvre d'entrée d'air 13 de l'invention reçoit une pluralité de dispositifs de traitement acoustique 25 et une pluralité de semelles de dégivrage alvéolées 27. De manière préférée, les semelles de dégivrage alvéolées 27 et les dispositifs de traitement acoustique 25 sont répartis sur toute la circonférence de la lèvre d'entrée d'air 13.

Deux semelles de dégivrage alvéolées adjacentes peuvent par exemple être emboîtées, imbriquées ou encastrées entre elles. De même, deux dispositifs de dégivrage adjacents peuvent par exemple être emboîtés entre eux, de sorte à définir une répartition continue du couple dispositif de traitement acoustique/semelle de dégivrage alvéolée sur toute la circonférence de la lèvre d'entrée d'air.

En variante, deux semelles de dégivrage alvéolées adjacentes peuvent être non pas imbriquées ou encastrées entre elles, mais simplement positionnées côte à côte sans continuité.

On se réfère à la figure 3 illustrant une semelle de dégivrage alvéolée 27 selon l'invention.

La semelle de dégivrage alvéolée 27 adopte à titre d'exemple une forme de parallélépipède rectangle comportant une paroi inférieure 29, destinée à être fixée à la paroi interne de la lèvre d'entrée d'air, une paroi supérieure 31, sur laquelle est destiné à être monté le dispositif de traitement acoustique, et quatre parois latérales 33a, 33b 33c, 33d.

La superficie définie par la paroi supérieure 31 de la semelle de dégivrage alvéolée est sensiblement égale à celle définie par une paroi inférieure du dispositif de traitement acoustique. Cela permet, contrairement à l'art antérieur où des canaux unitaires de circulation du fluide de dégivrage sont chacun montés sur la paroi inférieure du dispositif de traitement acoustique, de dissocier la fonction de traitement acoustique de celle de dégivrage des volumes acoustiques principaux, et de simplifier l'agencement du dispositif de traitement acoustique et du dispositif de dégivrage dans la lèvre d'entrée d'air. En effet, il suffit avec la présente invention de monter le dispositif de traitement acoustique sur la semelle de dégivrage alvéolée, par exemple par collage et/ou par brasage et/ou par tout autre moyen de fixation adapté tel que par rivetage, vissage, etc.

Les parois latérales 33a et 33d définissent respectivement des parois latérales transverses amont et aval lorsque la semelle de dégivrage alvéolée est montée dans la lèvre d'entrée d'air, en rapport au trièdre L, V, T défini aux figures et au sens de circulation du flux d'air à l'intérieur de l'ensemble propulsif. De la même manière, les parois latérales 33b et 33c définissent quant à elles des parois latérales longitudinales lorsque la semelle de dégivrage alvéolée est montée dans la lèvre d'entrée d'air, en rapport au trièdre L, V, T défini aux figures.

A titre d'exemple, l'épaisseur de la semelle de dégivrage alvéolée 27, définie par la distance séparant la paroi inférieure 29 de la paroi supérieure 31 de la semelle de dégivrage alvéolée, est comprise entre environ 2 mm et environ 20 mm. De façon préférée, l'épaisseur de la semelle de dégivrage alvéolée 27 est comprise entre environ 5 mm et environ 15 mm.

La semelle de dégivrage alvéolée 27 comporte un ensemble de puits acoustiques 34, débouchant au niveau des parois inférieure 29 et supérieure 31 de la semelle 27.

Les puits acoustiques 34 communiquent avec les perçages acoustiques 28 de la paroi interne 23 de la lèvre d'entrée d'air.

Les puits acoustiques 34 sont ainsi agencés dans la semelle de dégivrage selon une direction sensiblement verticale en référence au trièdre L, V T représenté aux figures.

Les puits acoustiques 34 présentent une section dont la forme peut être sensiblement identique à celle des perçages acoustiques 28 de la paroi interne 23.

Selon l'exemple représenté, les perçages acoustiques 28 adoptent une forme oblongue. La section des puits acoustiques 34 est dans ce cas également oblongue.

Les puits acoustiques 34 permettent le passage d'ondes sonores provenant de l'ensemble propulsif. Les ondes sonores qui traversent les puits acoustiques 34 de la semelle de dégivrage alvéolée sont ensuite atténuées acoustiquement par le dispositif de traitement acoustique 25.

Comme représenté à la figure 4 illustrant une vue isométrique en coupe partielle de la semelle de dégivrage alvéolée 27, la semelle de dégivrage alvéolée 27 comporte en outre une pluralité de conduits de circulation 35 du fluide de dégivrage. Les conduits de circulation 35 du fluide de dégivrage s'inscrivent entre les puits acoustiques 34, par exemple selon une direction sensiblement longitudinale.

Les conduits de circulation 35 du fluide de dégivrage sont réalisés en un matériau étanche. Ainsi, le fluide de dégivrage circulant dans les conduits de circulation 35 ne se retrouve pas introduit à l'intérieur des puits acoustiques 34, ce qui permet de ne pas altérer les performances acoustiques de la semelle de dégivrage alvéolaire 27. Le fluide de dégivrage provient du dispositif d'alimentation en fluide de dégivrage, dont son fonctionnement est décrit en détails dans la suite de la description, en référence aux figures 6 à 12.

Les conduits de circulation 35 du fluide de dégivrage de la semelle de dégivrage alvéolée débouchent au niveau des parois latérales amont 33a et aval 33d de la semelle de dégivrage alvéolée 27.

Les conduits de circulation 35 du fluide de dégivrage s'inscrivent de façon préférée sur toute l'épaisseur de la semelle de dégivrage alvéolée 27. Les conduits de circulation 35 du fluide de dégivrage sont par exemple répartis de manière régulière à l'intérieur de la semelle, c'est-à-dire que tous les conduits de circulation ont une forme identique l'un par rapport à l'autre.

Selon une variante représentée à la figure 5 illustrant une vue isométrique de dessous d'un couple semelle de dégivrage alvéolée 27/dispositif de traitement acoustique 25, les conduits de circulation 35 du fluide de dégivrage sont répartis de manière irrégulière à l'intérieur de la semelle de dégivrage alvéolée, c'est-à-dire que les conduits de circulation du fluide de dégivrage présentent des formes distinctes l'un par rapport à l'autre, ce qui permet d'optimiser la semelle de dégivrage alvéolée en fonction des besoins thermiques. L'agencement des conduits de circulation du fluide de dégivrage par rapport au volume du dispositif de traitement acoustique peut être adapté en forme, section et surface pour trouver le meilleur compromis thermique-acoustique.

Les conduits de circulation 35 du fluide de dégivrage de la semelle de dégivrage alvéolée débouchent au niveau des parois latérales amont 33a et aval 33d de la semelle de dégivrage alvéolée 27.

On se réfère à la figure 6 illustrant un premier mode de réalisation de la lèvre d'entrée d'air l'invention.

Le dispositif d'alimentation 26 en fluide de dégivrage comporte un tube 37 d'injection d'un fluide de dégivrage, du type tube « Piccolo » connu de l'art antérieur.

Le tube 37 d'injection d'un fluide de dégivrage adopte une forme d'anneau monté de façon annulaire sur la cloison 19 fermant la cavité 15 de la lèvre 13.

Le tube 37 comporte une pluralité de perçages (non représentés) à travers lesquels le fluide de dégivrage passe, depuis l'intérieur du tube 37 jusqu'à l'intérieur de la cavité 15 de la lèvre d'entrée d'air 13.

Dans d'autres réalisations, le dispositif d'alimentation en fluide de dégivrage peut-être réalisé par un système de circulation tournante d'un fluide de dégivrage, tel qu'un tube « swirl ».

On se réfère à la figure 7 illustrant une vue en coupe de l'ensemble formé par la paroi interne 23 de la lèvre d'entrée d'air, et par le couple semelle de dégivrage alvéolée 27/dispositif de traitement acoustique 25.

Lorsque le fluide de dégivrage est introduit dans la cavité 15 de la lèvre d'entrée d'air 13 par le tube Piccolo, le fluide de dégivrage circule dans la semelle de dégivrage alvéolée 27 en parcourant les conduits de circulation 35, depuis la paroi latérale amont 33a et jusqu'à la paroi latérale aval 33d de la semelle de dégivrage alvéolée (flèche F1). Les ondes sonores (représentées par la flèche F2) provenant de l'ensemble propulsif traversent les puits acoustiques 34 de la semelle de dégivrage alvéolée 27 et sont ensuite atténuées acoustiquement par le dispositif de traitement acoustique 25.

Comme représenté schématiquement à la figure 7, la semelle de dégivrage alvéolée 27 est fixée sur la paroi interne 23 de la lèvre d'entrée d'air 13 par des points de brasure 38 (la réalisation de la fixation de la semelle de dégivrage alvéolée à la paroi interne de la lèvre est davantage expliquée dans la suite de la description en référence aux figures 13 à 15).

Les puits acoustiques 34 de la semelle de dégivrage alvéolée sont reliés à la paroi interne 23 au niveau des points de brasure 38 par l'intermédiaire de deux rayons R1, R2, permettant d'augmenter la surface d'ouverture acoustique de la semelle de dégivrage alvéolée. A titre d'exemple, la surface acoustique définie par la projection des puits acoustiques 34 sur la surface d'installation de la semelle de dégivrage alvéolée définit environ 75% de la surface totale de la semelle de dégivrage alvéolée.

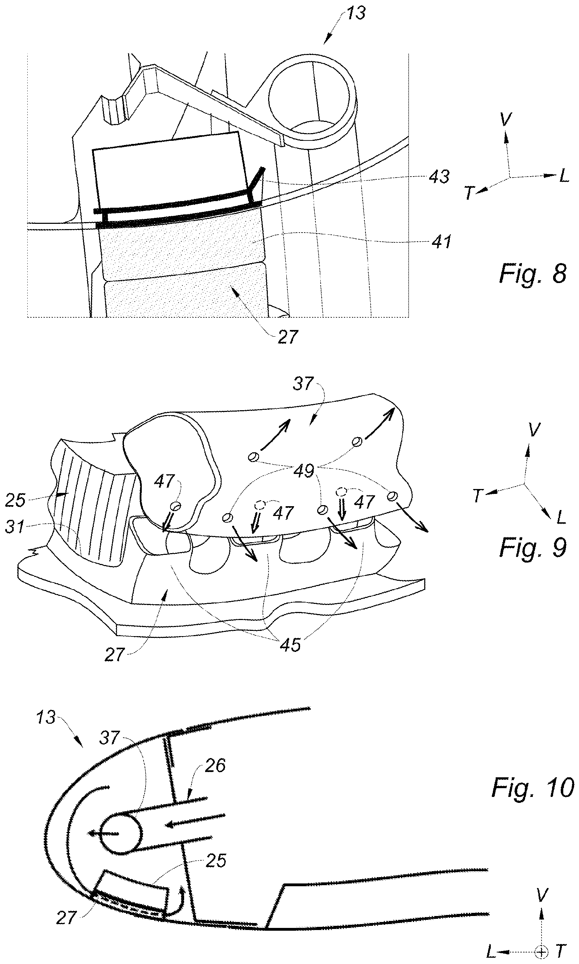

Selon une variante représentée à la figure 8, un bord amont 41 de la semelle de dégivrage alvéolée 27, lorsqu'elle est montée dans la lèvre d'entrée d'air 13, comporte un déflecteur 43 utilisé pour augmenter la quantité de fluide de dégivrage, issu du tube 37, captée par la semelle de dégivrage alvéolée.

En variante, la semelle de dégivrage comporte au moins une surface d'échange conçue pour conduire le fluide de dégivrage provenant du dispositif d'alimentation 26 en fluide de dégivrage par conduction à travers ladite semelle de dégivrage alvéolée. La semelle de dégivrage alvéolée se comporte ainsi comme un radiateur ou un échangeur thermique.

Selon le premier mode de réalisation de la lèvre d'entrée d'air qui vient d'être décrit en référence aux figures 6 à 8, la circulation du fluide de dégivrage dans la semelle de dégivrage alvéolée est dite ambiante.

Selon un deuxième mode de réalisation représenté à la figure 9 à laquelle on se réfère à présent, la circulation du fluide de dégivrage dans la semelle de dégivrage alvéolée est dite semi-forcée.

La semelle de dégivrage alvéolée 27 comporte au niveau de son bord amont 41 un ensemble de buses d'injection 45 du fluide de dégivrage. Les buses de dégivrage communiquent avec les conduits de circulation du fluide de dégivrage, qui débouchent au niveau de la paroi supérieure 31 de la semelle de dégivrage alvéolée 27.

Chaque buse d'injection 45 du fluide de dégivrage est agencée sensiblement en regard d'un perçage 47 du tube 37 d'injection du fluide de dégivrage.

Sur l'exemple de réalisation de la figure 9, trois perçages 47 du tube 37 alimentent trois buses d'injection 45. Il est envisagé de prévoir autant de buses d'injection 45 qu'il y a de perçages 47.

Des perçages 49 du tube 37 injectent le fluide de dégivrage dans la cavité de la lèvre d'entrée d'air.

Selon les premier et deuxième modes de réalisation qui viennent d'être décrits, le tube 37 d'alimentation du fluide de dégivrage alimente la semelle de dégivrage alvéolée 27 depuis l'amont vers l'aval de la semelle de dégivrage alvéolée 27, comme représenté schématiquement à la figure 10.

Selon un troisième mode de réalisation représenté aux figures 11 e 12 auxquelles on se réfère à présent, le dispositif d'alimentation 26 en fluide de dégivrage ne comporte plus de tube 37. La cavité 15 de la lèvre d'entrée d'air 13 reçoit une paroi 51 de blocage du fluide de dégivrage, montée de façon annulaire en amont de la sortie du dispositif d'alimentation 26 en fluide de dégivrage. La paroi 51 est conçue et agencée dans la cavité 15 de la lèvre d'entrée d'air de façon à bloquer la diffusion du fluide de dégivrage provenant du dispositif d'alimentation 26 au-delà de la paroi 51. Le fluide de dégivrage lorsqu'introduit dans la cavité 15 de la lèvre d'entrée d'air se trouve alors forcé de circuler dans la semelle de dégivrage alvéolée 27 via les conduits de circulation 35 du fluide de dégivrage, depuis la paroi latérale aval 33d jusqu'à la paroi latérale amont 33a de la semelle de dégivrage alvéolée 27.

La paroi 51 de blocage du fluide de dégivrage comporte un premier bord de fixation 53, attaché à la cloison annulaire 19, et un deuxième bord de fixation 55, attaché au dispositif de traitement acoustique 25 ou à la semelle de dégivrage alvéolée 27.

La semelle de dégivrage alvéolée 27 de l'invention peut être obtenue à partir de tôles épaisses comportant des usinages chimiques ou mécaniques. La semelle de dégivrage alvéolée peut également être obtenue en fonderie ou en fabrication additive.

Les différents modes de fixation de la semelle de dégivrage alvéolée 27 sur la paroi interne 23 de la lèvre d'entrée d'air sont à présent décrits en référence aux figures 13 à 15.

Une première réalisation de la fixation de la semelle de dégivrage alvéolée sur la paroi interne de la lèvre d'entrée d'air illustrée à la figure 13 consiste à braser et/ou à coller la semelle de dégivrage alvéolée 27 sur la paroi interne 23 de la lèvre d'entrée d'air.

Selon une deuxième réalisation de la fixation de la semelle de dégivrage alvéolée 27 sur la paroi interne 23 de la lèvre d'entrée d'air illustrée à la figure 14, la semelle de dégivrage alvéolée 27 comporte des bords de fixation 57, 59, rivetés ou vissés à la paroi interne 23. Un joint d'étanchéité 61 peut être monté entre chaque bord de fixation 57, 59 et la paroi interne de la lèvre d'entrée d'air.

Selon une troisième réalisation de la fixation de la semelle de dégivrage alvéolée 27 sur la paroi interne 23 de la lèvre d'entrée d'air illustrée à la figure 15, la semelle de dégivrage alvéolée 27 comporte des bords de fixation 57, 59, fixés sur la paroi interne 23 de la lèvre d'entrée d'air par l'intermédiaire de brides de fixation 63, 65 rivetées ou vissées sur la paroi interne de la lèvre d'entrée d'air.

Un joint d'étanchéité 67 peut être monté entre chaque bord de fixation 57, 59 et la paroi interne 23 de la lèvre d'entrée d'air.

Selon une variante commune aux modes de réalisation qui viennent d'être décrits, la paroi supérieure 31 de la semelle de dégivrage alvéolée 27 peut comporter une pluralité de perçages, conçus pour assurer une communication entre la semelle de dégivrage alvéolée et le dispositif de traitement acoustique, de façon à permettre une continuité acoustique entre le dispositif de traitement acoustique et la semelle de dégivrage alvéolée.

## Revendications

1. Lèvre d'entrée d'air (13) de nacelle (3) pour turboréacteur d'aéronef, comportant une cavité (15) délimitée d'une part par un bord d'attaque (17) de la nacelle et d'autre part par une cloison annulaire (19), ladite lèvre d'entrée d'air (13) comportant :
- une paroi interne (23) ;
- un dispositif de traitement acoustique (25) et
- un dispositif de dégivrage pneumatique comportant un dispositif d'alimentation (26) en fluide de dégivrage,
la paroi interne (23) de la lèvre d'entrée d'air (13) comportant une pluralité de perçages acoustiques (28) et le dispositif de dégivrage pneumatique comportant au moins une semelle de dégivrage alvéolée (27), montée à l'intérieur de ladite cavité (15) sur ladite paroi interne (23) de la lèvre d'entrée d'air (13), ladite semelle de dégivrage alvéolée (27) comportant une pluralité de conduits de circulation (35) d'un fluide de dégivrage provenant du dispositif d'alimentation (26) en fluide de dégivrage et une pluralité de puits acoustiques (34) communiquant avec lesdits perçages acoustiques (28) de la paroi interne (23) de la lèvre d'entrée d'air (13), ledit dispositif de traitement acoustique (25) étant fixé sur une paroi supérieure (31) de ladite semelle de dégivrage alvéolée (27) et étant superposé à ladite semelle de dégivrage alvéolée (27), les puits acoustiques (34) de la semelle de dégivrage alvéolée (27) débouchant au niveau de parois inférieure (29) et supérieure (31) de la semelle de dégivrage alvéolée (27), la superficie de la paroi supérieure (31) de la semelle de dégivrage alvéolée (27) étant sensiblement égale à la superficie d'une paroi inférieure du dispositif de traitement acoustique (25).

2. Lèvre d'entrée d'air (13) selon la revendication 1, dans laquelle les conduits de circulation (35) d'un fluide de dégivrage de la semelle de dégivrage alvéolée (27) débouchent au moins au niveau de parois latérales amont (33a) et aval (33d) de la semelle de dégivrage alvéolée (27).

3. Lèvre d'entrée d'air (13) selon la revendication 1, dans laquelle la semelle de dégivrage alvéolée (27) comporte au moins un déflecteur (43) agencé pour capter le fluide de dégivrage provenant du dispositif d'alimentation (26) en fluide de dégivrage.

4. Lèvre d'entrée d'air (13) selon l'une quelconque des revendications 1 à 2, dans laquelle la semelle de dégivrage alvéolée (27) comporte au moins une surface d'échange conçue pour conduire le fluide de dégivrage provenant du dispositif d'alimentation (26) en fluide de dégivrage par conduction à travers ladite semelle de dégivrage alvéolée (27).

5. Lèvre d'entrée d'air (13) selon l'une quelconque des revendications 1 à 4, dans laquelle le dispositif d'alimentation (26) en fluide de dégivrage comporte un tube d'injection (37) d'un fluide de dégivrage agencé à l'intérieur de la cavité (15) de ladite lèvre d'entrée d'air (13), ledit tube d'injection (37) comportant une pluralité de perçages (47, 49) conçus pour délivrer un fluide de dégivrage à l'intérieur de ladite cavité (15), la semelle de dégivrage alvéolée (27) comportant au moins une buse d'injection (45) de fluide de dégivrage communiquant avec au moins un desdits conduits de circulation (35) du fluide de dégivrage, ladite au moins une buse d'injection (45) étant agencée sensiblement en regard d'au moins un desdits perçages (47) du tube d'injection (37) d'un fluide de dégivrage.

6. Lèvre d'entrée d'air (13) selon l'une quelconque des revendications 1 à 2, dans laquelle la cavité (15) de la lèvre d'entrée d'air (13) reçoit une paroi (51) de blocage du fluide de dégivrage, montée de façon annulaire en amont d'une sortie du dispositif d'alimentation (26) en fluide de dégivrage.

7. Lèvre d'entrée d'air (13) selon l'une quelconque des revendications 1 à 6, dans laquelle la semelle de dégivrage alvéolée (27) du dispositif de dégivrage acoustique présente une épaisseur comprise entre 2 mm et 20 mm, de préférence comprise entre 5 mm et 15 mm.

8. Lèvre d'entrée d'air (13) selon l'une quelconque des revendications 1 à 7, dans laquelle les conduits de circulation (35) du fluide de dégivrage sont répartis de manière irrégulière à l'intérieur de la semelle de dégivrage alvéolée (27).

9. Lèvre d'entrée d'air (13) selon l'une quelconque des revendications 1 à 8, dans laquelle la semelle de dégivrage alvéolée (27) est fixée sur la paroi interne (23) de la lèvre d'entrée d'air (13) par brasage et/ou par collage.

10. Lèvre d'entrée d'air (13) selon l'une quelconque des revendications 1 à 8, dans laquelle la semelle de dégivrage alvéolée (27) comporte un bord de fixation (57, 59) à la paroi interne (23) de la lèvre d'entrée d'air (13), ledit bord de fixation étant relié à ladite paroi interne (23) par rivetage et/ou par vissage.

11. Lèvre d'entrée d'air (13) selon l'une quelconque des revendications 1 à 8, dans laquelle la semelle de dégivrage alvéolée (27) comporte un bord de fixation (57, 59) à la paroi interne (23) de la lèvre d'entrée d'air (13) et comporte une bride de fixation (63, 65) de la semelle de dégivrage alvéolée (27), ladite bride de fixation (63, 65) étant montée sur la paroi interne (23) de la lèvre d'entrée d'air (13) et sur le bord de fixation de la semelle de dégivrage alvéolée (27).

12. Lèvre d'entrée d'air (13) selon l'une quelconque des revendications 1 à 11, dans laquelle la paroi supérieure (31) de la semelle de dégivrage alvéolée (27) comporte au moins un perçage conçu pour assurer une communication entre la semelle de dégivrage alvéolée (27) et le dispositif de traitement acoustique (25).

13. Lèvre d'entrée d'air (13) selon l'une quelconque des revendications 1 à 12, dans laquelle le dispositif de traitement acoustique (25) est fixé sur la paroi supérieure (31) de la semelle de dégivrage alvéolée (27) par collage et/ou par brasage et/ou par rivetage et/ou par vissage.

14. Lèvre d'entrée d'air (13) selon l'une quelconque des revendications 1 à 13, la lèvre d'entrée d'air (13) comportant une pluralité de semelles de dégivrage alvéolées (27) réparties sur toute la circonférence de la paroi interne (23) de la lèvre d'entrée d'air (13).

15. Lèvre d'entrée d'air (13) selon l'une quelconque des revendications 1 à 13, la lèvre d'entrée d'air (13) comportant une pluralité de semelles de dégivrage alvéolées (27) réparties sur toute la circonférence de la paroi interne (23) de la lèvre d'entrée d'air (13), lesdites semelles de dégivrage alvéolées (17) étant encastrées ou imbriquées entre elles.

## Patentansprüche

1. Lufteinlasslippe (13) einer Gondel (3) für ein Turbostrahltriebwerk eines Luftfahrzeugs, einen Hohlraum (15) beinhaltend, der einerseits durch eine Vorderkante (17) der Gondel, und andererseits durch eine ringförmige Wand (19) begrenzt ist, wobei die Lufteinlasslippe (13) beinhaltet:
- eine Innenwand (23);
- eine Schallbehandlungsvorrichtung (25) und
- eine pneumatische Enteisungsvorrichtung, die eine Versorgungsvorrichtung (26) für Enteisungsflüssigkeit beinhaltet,
wobei die Innenwand (23) der Lufteinlasslippe (13) eine Vielzahl von Schallbohrungen (28) beinhaltet, und die pneumatische Enteisungsvorrichtung mindestens eine zellenartige Enteisungssohle (27) beinhaltet, die im Inneren des Hohlraumes (15) an der Innenwand (23) der Lufteinlasslippe (13) angebracht ist, wobei die zellenartige Enteisungssohle (27) eine Vielzahl von Zirkulationskanälen (35) für eine Enteisungsflüssigkeit beinhaltet, die aus der Versorgungsvorrichtung (26) für Enteisungsflüssigkeit stammt, und eine Vielzahl von Schallschächten (34), die mit den Schallbohrungen (28) der Innenwand (23) der Lufteinlasslippe (13) kommunizieren, wobei die Schallbehandlungsvorrichtung (25) an einer oberen Wand (31) der zellenartigen Enteisungssohle (27) befestigt ist, und die zellenartige Enteisungssohle (27) überlagert, wobei die Schallschächte (34) der zellenartigen Enteisungssohle (27) im Bereich unterer (29) und oberer (31) Wände der zellenartigen Enteisungssohle (27) einmünden, wobei die Fläche der oberen Wand (31) der zellenartigen Enteisungssohle (27) im Wesentlichen gleich der Fläche einer unteren Wand der Schallbehandlungsvorrichtung (25) ist.

2. Lufteinlasslippe (13) nach Anspruch 1, wobei die Zirkulationskanäle (35) für Enteisungsflüssigkeit der zellenartigen Enteisungssohle (27) mindestens im Bereich der stromaufwärts (33a) und stromabwärts (33d) gelegenen Seitenwände der zellenartigen Enteisungssohle (27) einmünden.

3. Lufteinlasslippe (13) nach Anspruch 1, wobei die zellenartige Enteisungssohle (27) mindestens einen Abweiser (43) beinhaltet, der angeordnet ist, um die Enteisungsflüssigkeit, die aus der Versorgungsvorrichtung (26) für Enteisungsflüssigkeit stammt, aufzufangen.

4. Lufteinlasslippe (13) nach einem der Ansprüche 1 bis 2, wobei die zellenartige Enteisungssohle (27) mindestens eine Austauschoberfläche beinhaltet, die gestaltet ist, um die Enteisungsflüssigkeit, die aus der Versorgungsvorrichtung (26) für Enteisungsflüssigkeit stammt, durch Leiten durch die zellenartige Enteisungssohle (27) hindurch zu leiten.

5. Lufteinlasslippe (13) nach einem der Ansprüche 1 bis 4, wobei die Versorgungsvorrichtung (26) für Enteisungsflüssigkeit ein Einspritzrohr (37) für Enteisungsflüssigkeit beinhaltet, das im Inneren des Hohlraumes (15) der Lufteinlasslippe (13) angeordnet ist, wobei das Einspritzrohr (37) eine Vielzahl von Bohrungen (47, 49) beinhaltet, die gestaltet sind, um eine Enteisungsflüssigkeit im Inneren des Hohlraumes (15) abzugeben, wobei die zellenartige Enteisungssohle (27) mindestens eine Einspritzdüse (45) für Enteisungsflüssigkeit beinhaltet, die mit mindestens einem der Zirkulationskanäle (35) der Enteisungsflüssigkeit kommuniziert, wobei die mindestens eine Einspritzdüse (45) im Wesentlichen gegenüber mindestens einer der Bohrungen (47) des Einspritzrohres (37) für Enteisungsflüssigkeit angeordnet ist.

6. Lufteinlasslippe (13) nach einem der Ansprüche 1 bis 2, wobei der Hohlraum (15) der Lufteinlasslippe (13) eine Wand (51) zum Blockieren der Enteisungsflüssigkeit aufnimmt, die ringförmig stromaufwärts eines Ausgangs der Versorgungsvorrichtung (26) für Enteisungsflüssigkeit angebracht ist.

7. Lufteinlasslippe (13) nach einem der Ansprüche 1 bis 6, wobei die zellenartige Enteisungssohle (27) der Schallenteisungsvorrichtung eine Dicke aufweist, die zwischen 2 mm und 20 mm, vorzugsweise zwischen 5 mm und 15 mm liegt.

8. Lufteinlasslippe (13) nach einem der Ansprüche 1 bis 7, wobei die Zirkulationskanäle (35) für Enteisungsflüssigkeit unregelmäßig im Inneren der zellenartigen Enteisungssohle (27) verteilt sind.

9. Lufteinlasslippe (13) nach einem der Ansprüche 1 bis 8, wobei die zellenartige Enteisungssohle (27) durch Löten und/oder Kleben an der Innenwand (23) der Lufteinlasslippe (13) befestigt ist.

10. Lufteinlasslippe (13) nach einem der Ansprüche 1 bis 8, wobei die zellenartige Enteisungssohle (27) einen Befestigungsrand (57, 59) an der Innenwand (23) der Lufteinlasslippe (13) beinhaltet, wobei der Befestigungsrand durch Nieten und/oder Schrauben mit der Innenwand (23) verbunden ist.

11. Lufteinlasslippe (13) nach einem der Ansprüche 1 bis 8, wobei die zellenartige Enteisungssohle (27) einen Befestigungsrand (57, 59) an der Innenwand (23) der Lufteinlasslippe (13) beinhaltet, und einen Befestigungsflansch (63, 65) der zellenartigen Enteisungssohle (27) beinhaltet, wobei der Befestigungsflansch (63, 65) an der Innenwand (23) der Lufteinlasslippe (13) und am Befestigungsrand der zellenartigen Enteisungssohle (27) angebracht ist.

12. Lufteinlasslippe (13) nach einem der Ansprüche 1 bis 11, wobei die obere Wand (31) der zellenartigen Enteisungssohle (27) mindestens eine Bohrung beinhaltet, die gestaltet ist, um für eine Kommunikation zwischen der zellenartigen Enteisungssohle (27) und der Schallbehandlungsvorrichtung (25) zu sorgen.

13. Lufteinlasslippe (13) nach einem der Ansprüche 1 bis 12, wobei die Schallbehandlungsvorrichtung (25) durch Kleben und/oder Löten und/oder durch Nieten und/oder durch Schrauben an der oberen Wand (31) der zellenartigen Enteisungssohle (27) befestigt ist.

14. Lufteinlasslippe (13) nach einem der Ansprüche 1 bis 13, wobei die Lufteinlasslippe (13) eine Vielzahl von zellenartigen Enteisungssohlen (27) beinhaltet, die über den gesamten Umfang der Innenwand (23) der Lufteinlasslippe (13) verteilt sind.

15. Lufteinlasslippe (13) nach einem der Ansprüche 1 bis 13, wobei die Lufteinlasslippe (13) eine Vielzahl von zellenartigen Enteisungssohlen (27) beinhaltet, die über den gesamten Umfang der Innenwand (23) der Lufteinlasslippe (13) verteilt sind, wobei die zellenartigen Enteisungssohlen (17) ineinander eingelassen oder verschachtelt sind.

## Claims

1. An air inlet lip (13) of a nacelle (3) for an aircraft turbojet engine, including a cavity (15) delimited, on the one hand, by a leading edge (17) of the nacelle and, on the other hand, by an annular partition (19), said air inlet lip (13) including;
- an inner wall (23);
- an acoustic treatment device (25) and
- a pneumatic de-icing device including a de-icing fluid supply device (26),
the inner wall (23) of the air inlet lip (13) including a plurality of acoustic bores (28) and in that the pneumatic de-icing device including at least one cellular de-icing base plate (27), mounted inside said cavity (15) on said inner wall (23) of the air inlet lip (13), said cellular de-icing base plate (27) including a plurality of conduits (35) for circulating a de-icing fluid from the de-icing fluid supply device (26) and a plurality of acoustic wells (34) communicating with said acoustic bores (28) of the inner wall (23) of the air inlet lip (13), said acoustic treatment device (25) being fastened on a top wall (31) of said cellular de-icing base plate (27) and being superimposed on said cellular de-icing base plate (27), the acoustic wells (34) of the cellular de-icing base plate (27) opening at the bottom (29) and top (31) walls of the cellular de-icing base plate (27), the area of the top wall (31) of the cellular de-icing base plate (27) being substantially equal to the area of a bottom wall of the acoustic treatment device (25).

2. The air inlet lip (13) according to claim 1, wherein the conduits (35) for circulating a de-icing fluid of the cellular de-icing base plate (27) open at least at upstream (33a) and downstream (33d) lateral walls of the cellular de-icing base plate (27).

3. The air inlet lip (13) according to claim 1, wherein the cellular de-icing base plate (27) includes at least one deflector (43) arranged to capture the de-icing fluid from the de-icing fluid supply device (26).

4. The air inlet lip (13) according to any one of claims 1 to 2, wherein the cellular de-icing base plate (27) includes at least one exchange surface designed to conduct the de-icing fluid from the de-icing fluid supply device (26) by conduction through said cellular de-icing base plate (27).

5. The air inlet lip (13) according to any one of claims 1 to 4, wherein the de-icing fluid supply device (26) includes a tube (37) for injecting a de-icing fluid arranged inside the cavity (15) of said air inlet lip (13), said injection tube (37) including a plurality of bores (47, 49) designed to deliver a de-icing fluid inside said cavity (15), the cellular de-icing base plate (27) including at least one de-icing fluid injection nozzle (45) communicating with at least one of said conduits (35) for circulating the de-icing fluid, said at least one injection nozzle (45) being arranged substantially opposite to at least one of said bores (47) of the tube (37) for injecting a de-icing fluid.

6. The air inlet lip (13) according to any one of claims 1 to 2, wherein the cavity (15) of the air inlet lip (13) receives a wall (51) for blocking the de-icing fluid, annularly mounted upstream of an outlet of the de-icing fluid supply device (26).

7. The air inlet lip (13) according to any one of claims 1 to 6, wherein the cellular de-icing base plate (27) of the acoustic de-icing device has a thickness comprised between 2 mm and 20 mm, preferably comprised between 5 mm and 15 mm.

8. The air inlet lip (13) according to any one of claims 1 to 7, wherein the conduits (35) for circulating the de-icing fluid are unevenly distributed inside the cellular de-icing base plate (27).

9. The air inlet lip (13) according to any one of claims 1 to 8, wherein the cellular de-icing base plate (27) is fastened on the inner wall (23) of the air inlet lip (13) by brazing and/or by gluing.

10. The air inlet lip (13) according to any one of claims 1 to 8, wherein the cellular de-icing base plate (27) includes an edge (57, 59) for fastening to the inner wall (23) of the air inlet lip (13), said fastening edge being connected to said inner wall (23) by riveting and/or by screwing.

11. The air inlet lip (13) according to any one of claims 1 to 8, wherein the cellular de-icing base plate (27) includes an edge (57, 59) for fastening to the inner wall (23) of the air inlet lip (13) and includes a flange (63, 65) for fastening the cellular de-icing base plate (27), said fastening flange (63, 65) being mounted on the inner wall (23) of the air inlet lip (13) and on the edge for fastening the cellular de-icing base plate (27).

12. The air inlet lip (13) according to any one of claims 1 to 11, wherein the top wall (31) of the cellular de-icing base plate (27) includes at least one bore designed to ensure a communication between the cellular de-icing base plate (27) and the acoustic treatment device (25).

13. The air inlet lip (13) according to any one of claims 1 to 12, wherein the acoustic treatment device (25) is fastened on the top wall (31) of the cellular de-icing base plate (27) by gluing and/or by brazing and/or by riveting and/or by screwing.

14. The air inlet lip (13) according to any one of claims 1 to 13, the air inlet lip (13) including a plurality of cellular de-icing base plates (27) distributed over the entire circumference of the inner wall (23) of the air inlet lip (13).

15. The air inlet lip (13) according to any one of claims 1 to 13, the air inlet lip (13) including a plurality of cellular de-icing base plates (27) distributed over the entire circumference of the inner wall (23) of the air inlet lip (13), said cellular de-icing base plates (17) being embedded or nested to each other.
